# EUROPÄISCHE PATENTANMELDUNG

(11) **EP 4 261 067 A1**
(43) Veröffentlichungstag der Anmeldung: **18.10.2023**
(21) Anmeldenummer: 23164899.9
(22) Anmeldetag: 29.03.2023
(51) Int. Cl.: B60K 15/03

(54) **KRAFTSTOFFTANKANORDNUNG UND FAHRZEUG MIT DERSELBEN**

(30) Priorität: 13.04.2022 AT 502422022
(71) Anmelder: KTM AG, 5230 Mattighofen (AT)
(72) Erfinder: REINDL, Alexander, 5261 Uttendorf (AT)
(74) Vertreter: Torggler & Hofmann Patentanwälte - Innsbruck

(57) **Zusammenfassung**

Kraftstofftankanordnung (10) für ein Fahrzeug (11), insbesondere ein Motorrad, mit einem ersten Tankkörper (1), zumindest einem zweiten Tankkörper (2) sowie zumindest einem Verbindungselement (3, 4), über welches eine Fluidverbindung und optional eine mechanische Verbindung zwischen dem ersten Tankkörper (1) und dem zumindest einen zweiten Tankkörper (2) besteht, wobei der erste Tankkörper (1) vom zumindest einen zweiten Tankkörper (2) so beabstandet ist, dass sich zwischen dem ersten Tankkörper (1) und dem zumindest einen zweiten Tankkörper (2) und gegebenenfalls dem zumindest einen Verbindungselement (3, 4) ein Freiraum (5) befindet, in welchem zumindest eine weitere Baukomponente (6, 7, 8, 9) des Fahrzeugs anordenbar ist.

## Beschreibung

Die vorliegende Erfindung betrifft eine Kraftstofftankanordnung für ein Fahrzeug, insbesondere ein Motorrad, mit den Merkmalen des Oberbegriffs des Anspruchs 1.

Gattungsgemäße Kraftstofftankanordnungen weisen auf einen ersten Tankkörper, zumindest einen zweiten Tankkörper sowie zumindest ein Verbindungselement, über welches eine Fluidverbindung und optional eine mechanische Verbindung zwischen dem ersten Tankkörper und dem zumindest einen zweiten Tankkörper besteht.

Bei Motorrädern sind Kraftstofftanks mit mehreren Tankkörper grundsätzlich bekannt. Zu verweisen ist beispielsweise auf die
EP 3738813 A1.

Kraftstofftanks mit mehreren Tankkörpern bieten Vorteile, was sowohl die Flexibilität der Anordnung des Tanks am Fahrzeug als auch die einfache Herstellung der Kraftstofftankanordnung betrifft.

Insbesondere die Flexibilität der Anordnung ist gerade bei Motorrädern, aber auch bei anderen Fahrzeugen, von großem Vorteil, da der am Fahrzeug zur Verfügung stehende Bauraum in recht engen Grenzen limitiert ist. Bei der Entwicklung von Fahrzeugen wird daher beträchtlicher Aufwand darauf verwendet, den zur Verfügung stehenden Bauraum zu effektiv wie möglich auszunützen (sogenanntes "packaging").

Aufgabe der vorliegenden Erfindung ist es, Kraftstofftankanordnungen gemäß dem Stand der Technik hinsichtlich der effektiven Ausnützung des Bauraums zu verbessern.

Diese Aufgabe wird durch die Merkmale des Anspruchs 1 gelöst, nämlich indem der erste Tankkörper vom zumindest einen zweiten Tankkörper so beabstandet ist, dass sich zwischen dem ersten Tankkörper und dem zumindest einen zweiten Tankkörper und gegebenenfalls dem zumindest einen Verbindungselement ein Freiraum befindet, in welchem zumindest eine weitere Baukomponente des Fahrzeugs anordenbar ist.

Selbstverständlich kann mehr als ein Freiraum in dieser Art und Weise vorhanden sein.

An und für sich ist es gegenintuitiv, den zumindest einen zweiten Tankkörper vom ersten Tankkörper so weit zu beabstanden, dass sich ein substanzieller Freiraum ergibt. Ein Grundaspekt der Erfindung ist es aber, diese Beabstandung bewusst so einzuführen, dass gewisse Baukomponenten des Fahrzeugs, wie beispielsweise eine Vorrichtung zum Abscheiden von Kraftstoffdämpfen, im erfindungsgemäß erzeugten Freiraum, vorzugsweise im Wesentlichen passgenau, Platz finden.

Die zumindest eine weitere Baukomponente kann bevorzugt zumindest eines der folgenden beinhalten:
- eine Vorrichtung zum Abscheiden von Kraftstoffdämpfen, beispielsweise in Form eines sogenannten Aktivkohlefilter-Moduls (kurz: AKF-Modul),
- ein Steuergerät, beispielsweise zum Realisieren von Motor- und/oder Bremsfunktionen (beispielsweise ABS-Modul),
- eine Pumpe, beispielsweise für Kraftstoff, insbesondere externe Kraftstoffpumpe, und/oder
- ein Ausgleichsbehälter, beispielsweise für Kühlflüssigkeit.

Schutz begehrt wird außerdem für eine Anordnung einer Kraftstofftankanordnung nach einem der vorhergehenden Ansprüche und zumindest einer im Freiraum angeordneten weiteren Baukomponente.

Des Weiteren wird Schutz für ein Fahrzeug, insbesondere ein Motorrad begehrt, welches eine erfindungsgemäße Kraftstofftankanordnung und/oder eine erfindungsgemäße Anordnung aufweist.

Das Fahrzeug kann insbesondere ein einspuriges Fahrzeug sein. Mehrspurig Fahrzeuge können aber natürlich grundsätzlich auch mit einer Kraftstofftankanordnung gemäß der Erfindung ausgestattet werden.

Beispiele für weitere Fahrzeuge wären All Terrain Vehicles (ATV) oder Quads.

Zu bemerken ist, dass sich der erste Tankkörper und der zumindest eine zweite Tankkörper grundsätzlich kontaktieren können, beispielsweise über das zumindest eine Verbindungselement, wenn es mit dem ersten Tankkörper und/oder dem zumindest einen zweiten Tankkörper integral ausgeführt ist.

Die erfindungsgemäße Beabstandung, um einen Freiraum zu erzeugen, liegt aber nur dann vor, wenn zumindest bereichsweise zwischen dem ersten Tankkörper und dem zumindest einen zweiten Tankkörper ein so großer Abstand vorliegt, dass der entstehende Freiraum auf technisch sinnvolle Art und Weise für das Anordnen weiterer Baukomponenten - das heißt vom ersten Tankkörper, vom zumindest einen zweiten Tankkörper und vom zumindest einen Verbindungselement separate Baukomponenten - des Fahrzeugs verwendet werden kann.

Der bereichsweise Mindestabstand im Bereich des Freiraums kann dafür beispielsweise zumindest 1 cm, bevorzugt 3 cm und besonders bevorzugt 5 cm, betragen.

In besonders bevorzugten Ausführungsformen beträgt der Mindestabstand im Bereich des Freiraums etwa 7 cm.

Grundsätzlich kann das zumindest eine Verbindungselement zwischen dem ersten Tankkörper und dem zumindest einen zweiten Tankkörper und/oder außerhalb eines Zwischenraums zwischen dem ersten Tankkörper und dem zumindest einen zweiten Tankkörper angeordnet sein. Liegt das zumindest eine Verbindungselement zwischen dem ersten Tankkörper und dem zumindest einen zweiten Tankkörper wird der erfindungsgemäße Freiraum in den meisten Fällen auch durch das zumindest eine Verbindungselement begrenzt sein.

Der erste Tankkörper kann bevorzugt ein erstes Tankvolumen und/oder der zumindest eine zweite Tankkörper kann bevorzugt zumindest ein zweites Tankvolumen beinhalten.

Das zumindest eine Verbindungselement stellt erfindungsgemäß eine Fluidverbindung zwischen dem ersten Tankkörper und dem zumindest einen zweiten Tankkörper her, sodass Kraftstoff vom ersten Tankvolumen in das zumindest eine zweite Tankvolumen gelangen kann.

Das zumindest eine Verbindungselement stellt optional eine mechanische Verbindung zwischen dem ersten Tankkörper und dem zumindest einen zweiten Tankkörper, womit der erste Tankkörper und der zumindest eine zweite Tankkörper strukturell aneinander befestigt sind und bevorzugt eine gemeinsam, beispielsweise an einem Rahmen des Fahrzeugs, zu montierende Baugruppe bilden.

Der im Tank zu haltende Kraftstoff kann bevorzugt Benzin oder ein Gemisch sein. Andere Kraftstoffe, wie beispielsweise Diesel oder Wasserstoff sind natürlich im Prinzip auch denkbar.

Vorteilhafte Weiterbildungen der Erfindung sind in den abhängigen Ansprüchen definiert.

Der zumindest eine zweite Tankkörper kann im am Fahrzeug montierten Zustand der Kraftstofftankanordnung unterhalb des ersten Tankkörpers angeordnet sein.

Der Freiraum kann zwischen einer ersten Außenfläche des ersten Tankkörpers und zumindest einer zweiten Außenfläche des zumindest einen zweiten Tankkörpers bestehen, wobei
- die erste Außenfläche und die zumindest eine zweite Außenfläche im Wesentlichen parallel zueinander sind und/oder
- die erste Außenfläche im am Fahrzeug montierten Zustand der Kraftstofftankanordnung im Wesentlichen horizontal ist und/oder
- die zumindest eine zweite Außenfläche im am Fahrzeug montierten Zustand der Kraftstofftankanordnung im Wesentlichen horizontal ist.

Ausführungsformen, wobei die Außenflächen in einem Winkel zueinander und/oder zu Horizontalen stehen, sind natürlich ebenso denkbar.

Selbstverständlich kann sich die geometrische Form des Freiraums bevorzugt nach der zumindest einen weiteren Baukomponente richten.

Bevorzugt kann genau ein erster Tankkörper vorhanden sein.

Bevorzugt können genau zwei zweite Tankkörper vorhanden sein.

Der erste Tankkörper im am Fahrzeug montierten Zustand der Kraftstofftankanordnung bevorzugt in lateraler Richtung zentral angeordnet sein. Anders ausgedrückt, kann der erste Tankkörper seinen Schwerpunkt auf einer zentralen Fahrzeuglängsachse haben, wenn die Kraftstofftankanordnung am Fahrzeug montiert ist.

Der erste Tankkörper kann in bevorzugten Ausführungsbeispielen in Bezug auf die zentrale Fahrzeuglängsachse im Wesentlichen spiegelsymmetrisch ausgebildet sein.

Der zumindest eine zweite Tankkörper kann im am Fahrzeug montierten Zustand der Kraftstofftankanordnung seitlich angeordnet sein, wobei vorzugweise ein zweiter Tankkörper links und ein zweiter Tankkörper rechts angeordnet ist.

Besonders bevorzugt kann es dabei sein, wenn sich ein zweiter Tankkörper links und ein anderer zweiter Tankkörper rechts eines Antriebsmotors des Fahrzeugs befindet, wenn die Kraftstofftankanordnung am Fahrzeug montiert ist.

Die Kraftstofftankanordnung kann zumindest ein Montageelement aufweisen, mittels welchem die Kraftstofftankanordnung an einem Chassis und/oder einem Rahmen des Fahrzeugs befestigbar ist.

Der erste Tankkörper und/oder der zumindest eine zweite Tankkörper kann bevorzugt durch Spritzgießen und/oder Blasformen und/oder als geschweißter Blechtank hergestellt sein.

Bei geschweißten Blechtanks kann beispielsweise Aluminiumblech und/oder Stahlblech verwendet werden.

Wie bereits erwähnt, kann das zumindest eine Verbindungselement integral mit dem ersten Tankkörper und/oder dem zumindest einen zweiten Tankkörper ausgeführt sein oder separat vom ersten Tankkörper und/oder vom zumindest einen zweiten Tankkörper.

Das zumindest eine Verbindungselement zum mechanischen Verbinden und/oder zum Herstellen der Fluidverbindung des ersten Tankkörpers und des zumindest einen zweiten Tankkörpers kann bevorzugt in einem Herstellungsprozess des ersten Tankkörpers und/oder des zweiten Tankkörpers mit hergestellt werden.

Bei einem geschweißten Blechtank könnte das zumindest eine Verbindungselement separat, beispielsweise als Einsatzelement, eingeschweißt und/oder gefügt werden.

Anders formuliert, kann das zumindest Verbindungselement gleichzeitig mit der Herstellung des ersten Tankkörper und/oder des zumindest einen zweiten Tankkörpers hergestellt werden.

Eine integrale Ausführung des zumindest einen Verbindungselements mit dem ersten Tankkörper und/oder dem zumindest einen zweiten Tankkörper kann auf diese Weise besonders einfach realisiert werden.

Eine Abmessung der zumindest einen weiteren Baukomponente kann bevorzugt im Wesentlichen einem Abstand zwischen dem ersten Tankkörper und dem zumindest einen zweiten Tankkörper entsprechen. Anders formuliert, kann die zumindest eine weitere Baukomponente passgenau im Freiraum zwischen dem ersten Tankkörper und dem zumindest einen zweiten Tankkörper angeordnet sein.

Darunter, dass die Abmessung der zumindest einen weiteren Baukomponente dem Abstand zwischen dem ersten Tankkörper und dem zumindest einen zweiten Tankkörper im Wesentlichen entspricht, kann verstanden werden, dass zwischen dem ersten Tankkörper und der weiteren Baukomponente und/oder zwischen der weiteren Baukomponente und dem zumindest einen weiteren Tankkörper kein nennenswerter Abstand mehr besteht, vorzugsweise nur noch Spaltmaße und Fertigungstoleranzen für überbleibende Zwischenräume sorgen.

In besonders bevorzugten Ausführungsformen der Erfindung kann die zumindest eine weitere Baukomponente an der Kraftstofftankanordnung montiert sein, vorzugsweise ausschließlich an der Kraftstofftankanordnung - und nicht etwa an anderen Komponenten des Fahrzeugs - montiert sein.

Eine solche Vormontage der zumindest einen weiteren Baukomponente kann für die Herstellung des Fahrzeugs besonders vorteilhaft sein, weil dann die Kraftstofftankanordnung in einem mit der zumindest einen weiteren Baukomponente montiert werden kann.

Beispielsweise Kabel oder Schläuche, welche die zumindest eine weitere Baukomponente mit dem Kraftstofftankanordnung verbinden, können dann besonders einfach so arrangiert werden, dass sie nicht knicken oder scheuern. Dieser Vorteil tritt besonders bei Vorrichtung zum Abscheiden von Kraftstoffdämpfen aus dem Tank auf.

Das Fahrzeug kann bevorzugt einen Sattel für einen Fahrer aufweisen, wobei die Kraftstofftankanordnung in Fahrtrichtung vor und/oder hinter dem Sattel angeordnet ist.

Die erwähnte Vorrichtung zum Abscheiden von Kraftstoffdämpfen kann bevorzugt im Bereich eines Tankdeckels der Kraftstofftankanordnung mit einem Innenraum der Kraftstofftankanordnung verbunden sein, sodass die Kraftstoffdämpfe der Vorrichtung zugeführt werden können und gleichzeitig die Gefahr minimiert ist, dass flüssiger Kraftstoff in die Vorrichtung gerät.

Der in der Vorrichtung abgeschiedene Kraftstoff kann beispielsweise in die Kraftstofftankanordnung zurückgeführt werden oder kann einem Antriebsmotor des Fahrzeugs zugeführt werden.

Die Vorrichtung zum Abscheiden von Kraftstoffdämpfen kann, wie erwähnt, als Aktivkohlefilter-Modul (AKF-Modul) ausgebildet sein.

Der Antriebsmotor des Fahrzeugs kann insbesondere eine Brennkraftmaschine sein.

Weitere Vorteile und Einzelheiten der Erfindung ergeben sich aus den Figuren sowie der dazugehörigen Figurenbeschreibung. Dabei zeigen:
- Fig. 1: ein Ausführungsbeispiel einer Kraftstofftankanordnung gemäß der Erfindung,
- Fig. 2: eine Seitenansicht des Ausführungsbeispiels aus Fig. 1,
- Fig. 3: ein weiteres Ausführungsbeispiel einer Kraftstofftankanordnung gemäß der Erfindung,
- Fig. 4: eine analoge Darstellung zu Fig. 2 im an einem Rahmenteil montierten Zustand des Ausführungsbeispiels,
- Fig. 5: eine analoge Darstellung zu Fig. 4, wobei ein Motorbereich angedeutet ist,
- Fig. 6: eine Darstellung eines Ausführungsbeispiels eines Fahrzeugs mit einer erfindungsgemäßen Kraftstofftankanordnung sowie
- Fig. 7: ein Ausführungsbeispiel eines erfindungsgemäßen Fahrzeugs.

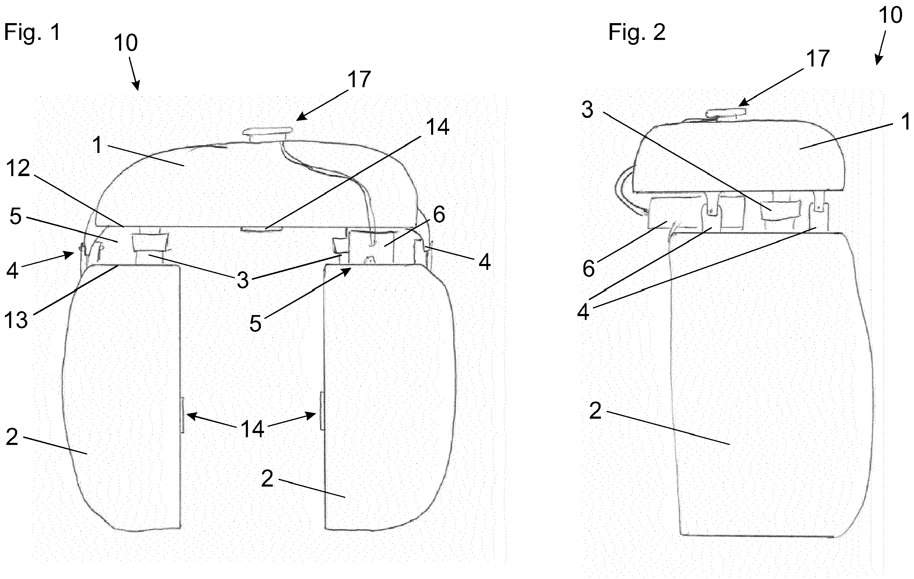

Fig. 1 zeigt ein Ausführungsbeispiel einer erfindungsgemäßen Kraftstofftankanordnung 10 mit einem ersten Tankkörper 1 und zwei zweiten Tankkörpern 2.

Es sind Verbindungselemente 3 vorgesehen, welche eine Fluidverbindung zwischen dem ersten Tankkörper 1 und den zweiten Tankkörpern 2 bereitstellen.

Kraftstoff, beispielsweise Benzin, welcher über den Tankdeckel 17 in den ersten Tankkörper 1 getankt werden kann, kann über die erwähnte Fluidverbindung auch in die zweiten Tankkörper 2 gelangen.

Außerdem sind Verbindungselemente 3 vorgesehen, die eine mechanische Verbindung zwischen dem ersten Tankkörper 1 und den zweiten Tankkörpern 2 herstellen.

Die in Fig.1 gezeigte Ausführung ist dadurch als eine gemeinsame Baugruppe realisiert, was aber für die Erfindung nicht absolut notwendig ist.

Zu erwähnen ist, dass diejenigen Verbindungselemente 3, welche die Fluidverbindung bereitstellen, durchaus auch eine mechanische Verbindungsfunktion haben könnten. Im vorliegenden Ausführungsbeispiel haben sie jedoch keine oder nur eine sehr geringe mechanische Verbindungsfunktion.

Zwischen dem ersten Tankkörper 1, jeweils den zweiten Tankkörpern 2 und den Verbindungselementen 3, 4 besteht erfindungsgemäß ein Freiraum 5, der für weitere Baukomponenten genutzt werden kann.

In diesem Ausführungsbeispiel ist zwischen dem ersten Tankkörper 1 und dem in der Abbildung rechten zweiten Tankkörper 2 eine Vorrichtung 6 zum Abscheiden von Kraftstoffdämpfen vorgesehen.

Die Vorrichtung 6 ist in diesem Ausführungsbeispiel als AKF-Modul ausgebildet.

Die Vorrichtung 6 ist in diesem Ausführungsbeispiel im Bereich des Tankdeckels 17 mit einem Innenraum der Kraftstofftankanordnung 10 verbunden, im vorliegenden Ausführungsbeispiel beispielsweise mit dem Innenraum (ersten Volumen) des ersten Tankkörpers 1.

Wie am Freiraum 5 zwischen dem ersten Tankkörper 1 und dem in der Fig. 1 links dargestellten zweiten Tankkörper 2 zu erkennen ist, beleibt dieser Freiraum 5 in diesem Ausführungsbeispiel frei.

Zu erkennen ist, dass der Freiraum 5 jeweils durch eine erste Außenfläche 12 des ersten Tankkörpers 1 und eine zweite Außenfläche 13 des zweiten Tankkörpers 2 begrenzt ist.

In diesem Ausführungsbeispiel sind die erste Außenfläche 12 und die zweite Außenfläche 13 parallel zueinander, was einen vorteilhaften, im Wesentlichen quaderförmigen Freiraum 5 erzeugt, der für weitere Baukomponenten des Fahrzeugs 11 gut nutzbar ist.

In besonders bevorzugten Ausführungen ist der Freiraum an die Geometrie der zumindest einen weiteren Baukomponente angepasst, d.h. der erste Tankkörper 1 und der zumindest eine zweite Tankkörper 2 stellen dann, vorzugsweise im Wesentlichen nur, die Silhouette der zumindest einen weiteren Baukomponente frei.

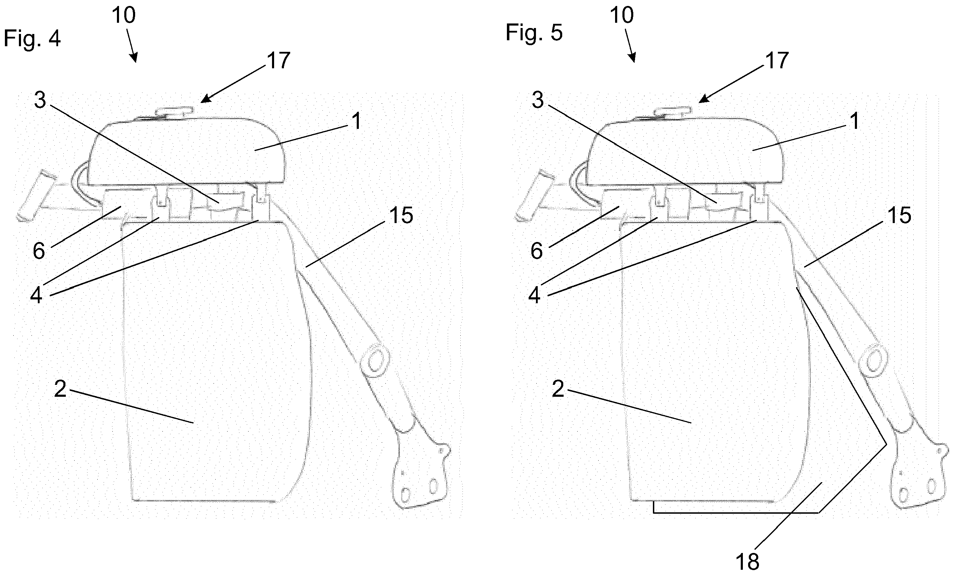

Über die Montageelemente 14 kann die Kraftstofftankanordnung 10 gemäß Fig. 1 beispielsweise an einem Rahmen 15 eines Fahrzeugs 11 montiert werden (siehe hierzu beispielsweise Fig. 5 bis 7).

Fig. 2 zeigt das Ausführungsbeispiel aus Fig. 1 in einer Seitenansicht.

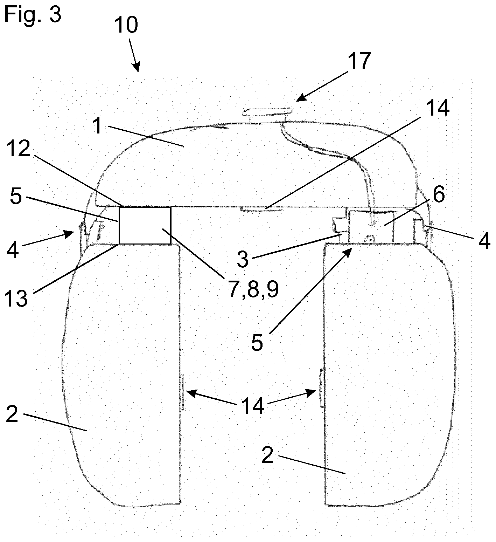

Fig. 3 zeigt ein zum Ausführungsbeispiel aus Fig. 1 analoges Ausführungsbeispiel, wobei im Freiraum 5 zwischen dem ersten Tankkörper 1 und dem links dargestellten zweiten Tankkörper 2 zumindest eine weiteres Baukomponente angeordnet ist, nämlich ein Steuergerät 7 und/oder eine Pumpe 8 und/oder ein Ausgleichsbehälter 9.

Fig. 4 ist analog zu Fig. 2, wobei das Ausführungsbeispiel im an einem Rahmenbauteil des Rahmens 15 des Fahrzeugs 11 montierten Zustand dargestellt ist, und zwar mittels der vorerwähnten Montageelemente 14.

In dieser beispielhaften Ausführung ist das Rahmenbauteil zum Halten eines Antriebsmotors und zum Aufnehmen einer Vorderradgabel ausgebildet.

Fig. 5 ist analog zur Fig. 4, wobei zusätzlich ein Motorbereich 18 schematisch angedeutet wurde. Der Antriebsmotor kann in diesem Motorbereich 18 zumindest teilweise zwischen den beiden zweiten Tankkörpern 2 Platz finden.

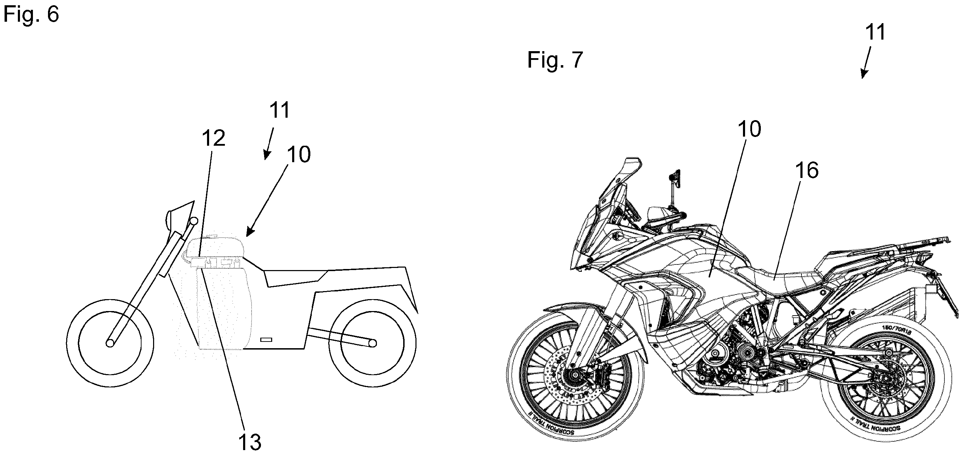

Fig. 6 zeigt rein schematisch ein erfindungsgemäßes Ausführungsbeispiel eines Fahrzeugs 11 mit einer erfindungsgemäßen Kraftstofftankanordnung 10.

Zu erkennen ist in Fig. 6 unter anderem, dass die erste Außenfläche 12 und die zweite Außenfläche 13 im am Fahrzeug 11 montierten Zustand der erfindungsgemäßen Kraftstofftankvorrichtung 10 im Wesentlichen horizontal sind.

Wie bereits erwähnt, können die erste Außenfläche 12 und/oder die zweite Außenfläche 13 auch Winkel zueinander und/oder in Bezug auf die Horizontale einschließen, wobei dies Einflüsse auf die Verteilung des Kraftstoffs im ersten Tankkörper 1 und im zumindest einen zweiten Tankkörper 2 haben kann.

Der durch die Beabstandung des ersten Tankkörpers 1 vom erkennbaren zweiten Tankkörper 2 entstehende Freiraum 5 ist an der Darstellung aus Fig. 9 gut erkennbar. Insbesondere ist zu erkennen, dass der Freiraum 5 durch die horizontale und parallele Ausführung der ersten Außenfläche 12 und der zweiten Außenfläche 13 im Wesentlichen quaderförmig ist, weshalb der Freiraum 5 besonders gut nutzbar ist - auch wenn er zu Zwecken der besseren Anschaulichkeit hier freigelassen wurde.

Fig. 7 zeigt ein alternatives Ausführungsbeispiel eines erfindungsgemäßen Fahrzeugs 11 - auch hier ein Motorrad.

Die erfindungsgemäße Kraftstofftankanordnung 10 ist hier zum Schutz der Kraftstofftankanordnung 10 durch eine Verkleidung des Motorrads verdeckt. Die Position der Kraftstofftankanordnung 10 ist aber durch das Bezugszeichen angedeutet.

Es ist deshalb zu erkennen, dass die Kraftstofftankanordnung 10 in Fahrtrichtung vor dem Sattel 16 des Fahrzeugs 11 angeordnet ist.

Zu erwähnen ist, dass der Sattel 16 an einem Rahmenbauteil analog zu jenem aus den Figuren 4 und 5 montiert sein kann.

Es ist zu erwähnen, dass die Verbindungselemente 3, 4 nicht in oder an einem Zwischenraum zwischen dem ersten Tankkörper 1 und dem zweiten Tankkörper 2 liegen müssen, wie in den vorliegenden Ausführungsbeispielen. Sie können beispielsweise auch weiter weg liegen, sodass der erfindungsgemäße Freiraum 5 beispielsweise nur vom ersten Tankkörper 1 und vom zumindest einen zweiten Tankkörper 2 begrenzt wird.

Verbindungselemente 4, welche eine mechanische Verbindung zwischen dem ersten Tankkörper 1 und dem zumindest einen zweiten Tankkörper 2 herstellen, sind im Rahmen der Erfindung keine Notwendigkeit. Beispielsweise könnten der erste Tankkörper 1 und der zumindest einen zweite Tankkörper 2 auch separat voneinander an einem Rahmen 15 des Fahrzeugs 11 befestigt sein.

### Bezugszeichenliste:

- 1: erster Tankkörper
- 2: zumindest ein zweiter Tankkörper
- 3: Verbindungselement (Fluidverbindung)
- 4: Verbindungselement (mechanische Verbindung)
- 5: Freiraum
- 6: Vorrichtung zum Abscheiden von Kraftstoffdämpfen
- 7: Steuergerät
- 8: Pumpe
- 9: Ausgleichsbehälter
- 10: Kraftstofftankanordnung
- 11: Fahrzeug
- 12: erste Außenfläche
- 13: zweite Außenfläche
- 14: zumindest ein Montageelement
- 15: Rahmen
- 16: Sattel
- 17: Tankdeckel
- 18: Motorbereich

## Patentansprüche

1. Kraftstofftankanordnung (10) für ein Fahrzeug (11), insbesondere ein Motorrad, mit einem ersten Tankkörper (1), zumindest einem zweiten Tankkörper (2) sowie zumindest einem Verbindungselement (3, 4), über welches eine Fluidverbindung und optional eine mechanische Verbindung zwischen dem ersten Tankkörper (1) und dem zumindest einen zweiten Tankkörper (2) besteht, **dadurch gekennzeichnet, dass** der erste Tankkörper (1) vom zumindest einen zweiten Tankkörper (2) so beabstandet ist, dass sich zwischen dem ersten Tankkörper (1) und dem zumindest einen zweiten Tankkörper (2) und gegebenenfalls dem zumindest einen Verbindungselement (3, 4) ein Freiraum (5) befindet, in welchem zumindest eine weitere Baukomponente (6, 7, 8, 9) des Fahrzeugs anordenbar ist.

2. Kraftstofftankanordnung nach Anspruch 1, **dadurch gekennzeichnet, dass** die zumindest eine weitere Baukomponente (6, 7, 8, 9) zumindest eines der folgenden beinhaltet: eine Vorrichtung (6) zum Abscheiden von Kraftstoffdämpfen, ein Steuergerät (7), eine Pumpe (8) und/oder ein Ausgleichsbehälter (9).

3. Kraftstofftankanordnung nach einem der vorhergehenden Ansprüche, **dadurch gekennzeichnet, dass** der zumindest eine zweite Tankkörper (2) im am Fahrzeug (11) montierten Zustand der Kraftstofftankanordnung (10) unterhalb des ersten Tankkörpers (1) angeordnet ist.

4. Kraftstofftankanordnung nach einem der vorhergehenden Ansprüche, **dadurch gekennzeichnet, dass** der Freiraum (5) zwischen einer ersten Außenfläche (12) des ersten Tankkörpers (1) und zumindest einer zweiten Außenfläche (13) des zumindest einen zweiten Tankkörpers (2) besteht, wobei vorzugsweise
- die erste Außenfläche (12) und die zumindest eine zweite Außenfläche (13) im Wesentlichen parallel zueinander sind und/oder
- die erste Außenfläche (12) im am Fahrzeug (11) montierten Zustand der Kraftstofftankanordnung (10) im Wesentlichen horizontal ist und/oder
- die zumindest eine zweite Außenfläche (13) im am Fahrzeug (11) montierten Zustand der Kraftstofftankanordnung (10) im Wesentlichen horizontal ist.

5. Kraftstofftankanordnung nach einem der vorhergehenden Ansprüche, **dadurch gekennzeichnet, dass** genau ein erster Tankkörper (1) vorhanden ist und/oder dass genau zwei zweite Tankkörper (2) vorhanden sind.

6. Kraftstofftankanordnung nach einem der vorhergehenden Ansprüche, **dadurch gekennzeichnet, dass** der erste Tankkörper (1) im am Fahrzeug (11) montierten Zustand der Kraftstofftankanordnung (10) in lateraler Richtung zentral angeordnet ist und/oder dass der zumindest eine zweite Tankkörper (2) im am Fahrzeug (11) montierten Zustand der Kraftstofftankanordnung (10) seitlich angeordnet ist, wobei vorzugweise ein zweiter Tankkörper (2) links und ein zweiter Tankkörper (2) rechts angeordnet ist.

7. Kraftstofftankanordnung nach einem der vorhergehenden Ansprüche, **dadurch gekennzeichnet, dass** die Kraftstofftankanordnung (10) zumindest ein Montageelement (14) aufweist, mittels welchem die Kraftstofftankanordnung (10) an einem Chassis und/oder einem Rahmen (15) des Fahrzeugs (11) befestigbar ist.

8. Kraftstofftankanordnung nach einem der vorhergehenden Ansprüche, **dadurch gekennzeichnet, dass** der erste Tankkörper (1) und/oder der zumindest eine zweite Tankkörper (2) durch Spritzgießen und/oder Blasformen und/oder als geschweißter Blechtank hergestellt ist.

9. Kraftstofftankanordnung nach Anspruch 8, **dadurch gekennzeichnet, dass** das zumindest eine Verbindungselement (3, 4) zum mechanischen Verbinden und/oder zum Herstellen der Fluidverbindung des ersten Tankkörpers (1) und des zumindest einen zweiten Tankkörpers (2) in einem Herstellungsprozess des ersten Tankkörpers (1) und/oder des zweiten Tankkörpers (2) mit hergestellt wird.

10. Anordnung einer Kraftstofftankanordnung (10) nach einem der vorhergehenden Ansprüche und zumindest einer im Freiraum (5) angeordneten weiteren Baukomponente (6, 7, 8, 9), insbesondere einer Vorrichtung (6) zum Abscheiden von Kraftstoffdämpfen, einem Steuergerät (7), einer Pumpe (8) und/oder einem Ausgleichsbehälter (9).

11. Anordnung nach Anspruch 10, **dadurch gekennzeichnet, dass** eine Abmessung der zumindest einen weiteren Baukomponente (6, 7, 8, 9) im Wesentlichen einem Abstand zwischen dem ersten Tankkörper (1) und dem zumindest einen zweiten Tankkörper (2) entspricht.

12. Anordnung nach Anspruch 10 oder 11, **dadurch gekennzeichnet, dass** die zumindest eine weitere Baukomponente (6, 7, 8, 9) an der Kraftstofftankanordnung (10) montiert ist, vorzugsweise ausschließlich an der Kraftstofftankanordnung (10) montiert ist.

13. Fahrzeug (11), insbesondere Motorrad, mit einer Anordnung nach einem der Ansprüche 10 bis 12 und/oder mit einer Kraftstofftankanordnung (10) nach einem der Ansprüche 1 bis 9.

14. Fahrzeug nach Anspruch 13, **dadurch gekennzeichnet, dass** das Fahrzeug (11) einen Sattel (16) für einen Fahrer aufweist, wobei die Kraftstofftankanordnung (10) in Fahrtrichtung vor und/oder hinter dem Sattel (16) angeordnet ist.
